# EUROPEAN PATENT APPLICATION

(11) **EP 3 718 705 A1**
(43) Date of publication of application: **07.10.2020**
(21) Application number: 18881628.4
(22) Date of filing: 16.11.2018
(51) Int. Cl.: B25J 13/00

(54) **ROBOT CONTROL DEVICE AND ROBOT SYSTEM PROVIDED WITH SAME**

(30) Priority: 27.11.2017 JP 2017227113
(71) Applicant: Kawasaki Jukogyo Kabushiki Kaisha, Kobe-shi, Hyogo 650-8670 (JP)
(72) Inventor: TANABE, Masataka, Kobe-shi, Hyogo 6508670 (JP); KAMEYAMA, Atsushi, Kobe-shi, Hyogo 6508670 (JP); KIKUCHI, Takahiro, Kobe-shi, Hyogo 6508670 (JP); YASUMOTO, Hiroaki, Kobe-shi, Hyogo 6508670 (JP)
(74) Representative: Arnold & Siedsma
(86) International application number: PCT/JP2018/042520
(87) International publication number: WO 2019/102947

(57) **Abstract**

The present disclosure is to provide a robot control device configured to control a robot. The device controls the robot selectively in a normal operating mode in which the robot is operated within an allowable range defined beforehand according to load applied to the robot and an overdrive mode in which the robot is operated at high speed without operation of the robot being limited to the allowable range. The device operates the robot at high speed in the overdrive mode by interlockingly changing magnification scales of a plurality of parameters defined beforehand that may specify an operating speed of the robot, based on an overdrive magnification scale defined beforehand about a degree of the high-speed operation in the overdrive mode.

## Description

### TECHNICAL FIELD

The present disclosure relates to a robot control device and a robot system having the robot control device.

### BACKGROUND ART

Conventionally, robot control devices which controls a robot are known. For example, such a robot control device is proposed in Patent Document 1.

The robot control device of Patent Document 1 aims at always demonstrating the capability of a motor to the maximum extent, no matter what point an acceleration start point and a deceleration end point of the robot may be, to shorten the operating time. Moreover, when a teaching point memory means receives a move command, the robot control device analyzes the move command and determines from which point to which point the robot is to be moved.

### [Reference Document of Conventional Art]

### [Patent Document]

[Patent Document 1] JP1995-200033A

### DESCRIPTION OF THE DISCLOSURE

### [Problem to be Solved by the Disclosure]

As described above, the robot control device of Patent Document 1 aims at demonstrating the capability of the motor to the maximum extent to shorten the operating time. However, other conventional robot control devices including Patent Document 1 generally operate the robot within an allowable range defined beforehand according to the load applied to the robot. Therefore, the tact time could not fully be shortened.

Therefore, one purpose of the present disclosure is to provide a robot control device and a robot system having the robot control device, which are capable of fully shortening a tact time by operating a robot, without limiting the operation within an allowable range defined beforehand according to the load applied to the robot.

### [Summary of the Disclosure]

In order to solve the problem, a robot control device according to one aspect of the present disclosure configured to control a robot is provided. The robot control device controls the robot selectively in a normal operating mode in which the robot is operated within an allowable range defined beforehand according to load applied to the robot and an overdrive mode in which the robot is operated at high speed without operation of the robot being limited to the allowable range. The robot control device operates the robot at high speed in the overdrive mode by interlockingly changing magnification scales of a plurality of parameters defined beforehand that may specify an operating speed of the robot, based on an overdrive magnification scale defined beforehand about a degree of the high-speed operation in the overdrive mode.

According to this configuration, the robot control device can be provided, which is possible to fully shorten the tact time by operating the robot at high speed, without the operation being limited to the allowable range defined beforehand according to the load applied to the robot.

The overdrive magnification scale may be set arbitrarily within a given range.

According to this configuration, the overdrive magnification scale can be changed according to a work situation of the robot.

The overdrive magnification scale may include a plurality of overdrive magnification scales set beforehand in a stepped fashion and one of the plurality of overdrive magnification scales may be set as the overdrive magnification scale.

According to this configuration, the overdrive magnification scale can be changed according to the work situation of the robot.

For example, the plurality of parameters may include at least any one of an acceleration/deceleration preset value according to operation of the robot, a limit value of electric current supplied to the robot, and a cutoff frequency of a low-pass filter that is applied to a positional instruction to the robot.

When operating the robot at high speed in the overdrive mode, information on an influence to the life of the robot may be notified.

According to this configuration, while grasping the influence to the life of the robot, the robot can be operated at high speed, without the operation being limited to the allowable range defined beforehand according to the load applied to the robot.

In order to solve the described problem, a robot system according to another aspect of the present disclosure is provided, which includes any one of the robot control devices described above and the robot controlled by the robot control device.

According to this configuration, the robot system can be provided, which is possible to fully shorten the tact time by operating the robot at high speed, without the operation being limited to the allowable range defined beforehand according to the load applied to the robot.

### [Effect of the Disclosure]

According to the present disclosure, the robot control device and the robot system having the robot control device can be provided, which are possible to fully shorten the tact time by operating the robot, without the operation being limited to the allowable range defined beforehand according to the load applied to the robot.

### BRIEF DESCRIPTION OF DRAWINGS

Fig. 1 is a schematic view illustrating the entire configuration of a robot system according to one embodiment of the present disclosure.
Fig. 2 is a flowchart of a method of operating a robot at high speed executed by the robot system according to this embodiment of the present disclosure.
Fig. 3 is a view illustrating one example of a program executed by the robot system according to this embodiment of the present disclosure.

### MODE FOR CARRYING OUT THE DISCLOSURE

### (Entire Configuration)

Hereinafter, a robot control device and a robot system having the robot control device according to one embodiment of the present disclosure is described with reference to the drawings. Note that the present disclosure is not limited to this embodiment. Moreover, below, throughout the figures, the same reference characters are given to the same or corresponding elements to omit redundant description.

### (Robot System 10)

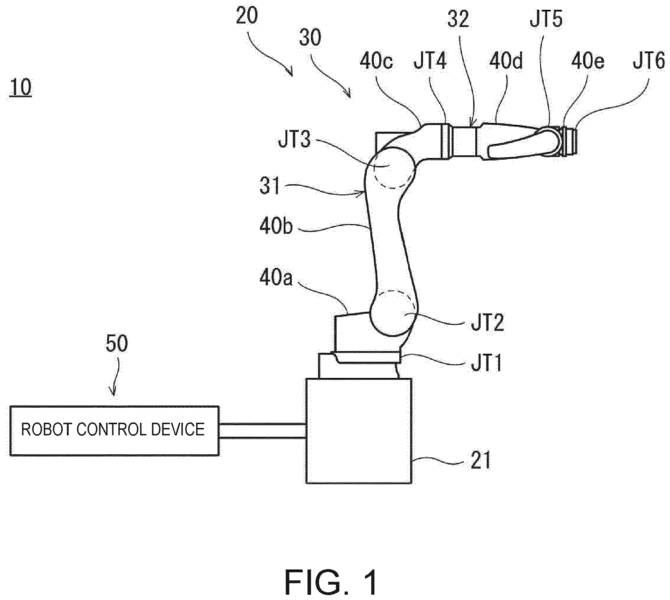

Fig. 1 is a schematic view illustrating the entire configuration of the robot system according to this embodiment. As illustrated in Fig. 1, a robot system 10 according to this embodiment includes a robot 20 and a robot control device 50 which controls the robot 20.

### (Robot 20)

The robot 20 includes a pedestal 21, a robotic arm 30 of which a base-end part is coupled to the pedestal 21, an end effector (not illustrated) which is attached to a tip-end part of the robotic arm 30, and the robot control device 50.

### (Robotic Arm 30)

As illustrated in Fig. 1, the robotic arm 30 is an articulated arm having six joints JT1-JT6, and six links 40a-40f serially coupled to each other through these joints.

A first arm part 31 is comprised of a coupling body of the links and the joints, such as a first joint JT1, a first link 40a, a second joint JT2, a second link 40b, a third joint JT3, and a third link 40c. In detail, the first joint JT1 couples the pedestal 21 to a base-end part of the first link 40a rotatably about an axis extending in the vertical direction. The second joint JT2 couples a tip-end part of the first link 40a to a base-end part of the second link 40b rotatably about an axis extending in the horizontal direction. The third joint JT3 couples a tip-end part of the second link 40b to a base-end part of the third link 40c rotatably about an axis extending in the horizontal direction.

A second arm part 32 is comprised of a coupling body of the links and the joints, such as a fourth joint JT4, a fourth link 40d, a fifth joint JT5, a fifth link 40e, a sixth joint JT6, and a sixth link 40f. In detail, the fourth joint JT4 couples a tip-end part of the third link 40c to a base-end part of the fourth link 40d rotatably about an axis extending in the longitudinal direction of the third link 40c. The fifth joint JT5 couples a tip-end part of the fourth link 40d to a base-end part of the fifth link 40e rotatably about an axis extending in a direction perpendicular to the longitudinal direction of the fourth link 40d. The sixth joint JT6 rotatably couples a tip-end part of the fifth link 40e to a base-end part of the sixth link 40f in a twisted fashion. The end effector (not illustrated) is attached to a tip-end part of the sixth link 40f.

### (Robot Control Device 50)

Regarding the robot control device 50, although its concrete configuration is not limited in particular, it may be configured to be realized, for example, by a known processor (a CPU etc.) operating according to a program stored in a memory etc.

The robot control device 50 is possible to control the robot 20, while switching a mode between a normal operating mode in which the robot 20 is operated within an allowable range defined beforehand according to a load applied to the robot 20 and an overdrive mode in which the robot 20 is operated at high speed without the operation being limited within the allowable range.

Here, generally, in the robot, an allowable range of a current value is defined beforehand for every joint of the robotic arm while considering a certain safety factor so that the current value does not reach a saturation current, regardless of the operation pattern of the robot. Therefore, for example, the "allowable range defined beforehand according to the load applied to the robot 20" described above means the allowable range of the current value.

The robot control device 50 causes the robot 20 to operate at high speed in the overdrive mode by interlockingly changing magnification scales of a plurality of parameters defined beforehand which may specify an operating speed of the robot 20, based on an overdrive magnification scale defined beforehand about a degree of the high-speed operation in the overdrive mode.

Here, the plurality of parameters which may specify the operating speed of the robot 20 may include at least any one of an acceleration/deceleration preset value related to the operation of the robot 20, a limit value of electric current supplied to the robot 20, and a cutoff frequency of a low-pass filter which is applied to a positional instruction to the robot 20. The plurality of parameters may be set for every joint of the robotic arm 30.

The overdrive magnification scale may arbitrarily be set within a given range, or a plurality of overdrive magnification scales may be defined beforehand differently in a stepped fashion and one may be selected from the magnification scales. As the overdrive magnification scale increases, it is possible to set the acceleration/deceleration preset value related to the operation of the robot 20, the limit value of the current supplied to the robot 20, and the cutoff frequency of the low-pass filter which is applied to the positional instruction to the robot 20 larger. That is, there is a positive correlation between the overdrive magnification scale, and the acceleration/deceleration preset value related to the operation of the robot 20, the limit value of the current supplied to the robot 20, and the cutoff frequency of the low-pass filter which is applied to the positional instruction to the robot 20.

### (Notification of Influence to Life of Robot)

The robot control device 50 may notify information on influence to the life of the robot 20, when operating the robot 20 at high speed in the overdrive mode. The mode of the notification is not limited in particular, and, for example, characters or an image may be outputted on a display unit, or audio may be outputted from a speaker, or light may be outputted from a light source, such as LED.

### (How to Operate Robot at High Speed)

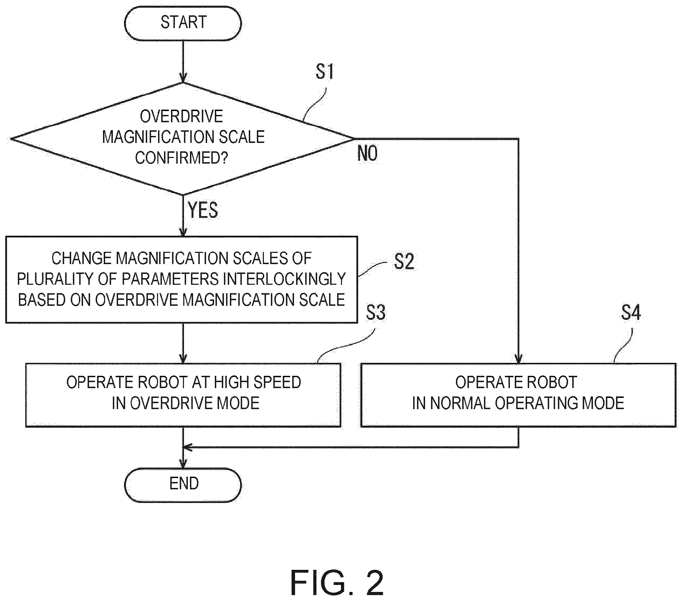

Below, one example of a method of operating the robot at high speed, which is executed by the robot system described above is described mainly based on Fig. 2. Fig. 2 is a flowchart of the method of operating the robot at high speed, which is executed by the robot system according to this embodiment.

First, if the robot control device 50 confirms an input of the overdrive magnification scale ("YES" at Step SI), it then changes the magnification scales of the plurality of parameters interlockingly based on the confirmed overdrive magnification scale (Step S2). Here, as described above, the plurality of parameters are parameters which may specify the operating speed of the robot 20, and, for example, they are the acceleration/deceleration preset value related to the operation of the robot 20, the limit value of the current supplied to the robot 20, and the cutoff frequency of the low-pass filter which is applied to the positional instruction to the robot 20.

Then, the robot control device 50 operates the robot 20 at high speed in the overdrive mode based on the plurality of interlockingly changed parameters (Step S3). As described above, in the robot system 10 according to this embodiment, the robot 20 can be operated at high speed.

Note that, if the robot control device 50 does not confirm the overdrive magnification scale ("NO" at Step SI), it operates the robot 20 in the normal operating mode (Step S4).

### (Example of Program)

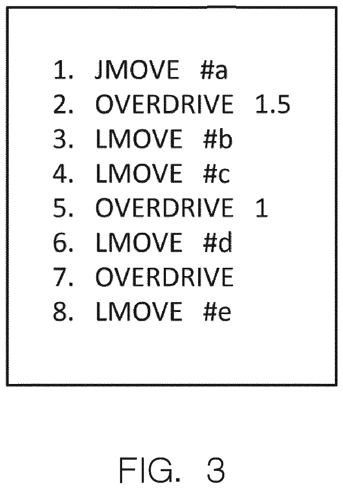

Here, based on Fig. 3, one example of the program executed by the robot system according to this embodiment is described. Fig. 3 is a view illustrating one example of the program.

In this example, a range within which the overdrive magnification scale can be set is 1.00 or more and 2.00 or less. Note that the settable range of the overdrive magnification scale is not limited to this example. That is, the settable range of the overdrive magnification scale may have the lower limit and the higher limit of higher than 1.00 and smaller than 2.00, or higher than 2.00. Moreover, the lower limit and the higher limit may be a value of the first place of decimals, or may be of the third or more place of decimals, or may be an integer of 1 or larger. Further, as described above, without limiting to that the plurality of overdrive magnification scales being defined beforehand in the stepped fashion and one being set from the magnification scales, the overdrive magnification scale may arbitrarily be set within a given range.

In this example, the overdrive magnification scale is set as 1.2 in advance by an auxiliary function or a monitor instruction which can set the entire operation of the robot 20. Thus, by setting the overdrive magnification scale, as described above, the robot control device 50 interlockingly changes the magnification scales of the plurality of parameters defined beforehand which may specify the operating speed of the robot 20 (e.g., the acceleration/deceleration preset value related to the operation of the robot 20, the limit value of the current supplied to the robot 20, and the cutoff frequency of the low-pass filter which is applied to the positional instruction to the robot 20) based on the overdrive magnification scale. Thus, the robot control device 50 operates the robot 20 at high speed in the overdrive mode. In detail, the operation is as follows.

First, the robot control device 50 operates a tip-end part of the robotic arm 30 at high speed based on a command of "1. JMOVE #a" with the overdrive magnification scale of 1.2 to a teaching point #a by using an interpolation of each axis. Here, the each axis interpolation refers to an operation of each joint of the robotic arm 30 by a specified angle, and therefore, it does not take the orbit of the tip-end part of the robotic arm 30 into consideration.

Next, the robot control device 50 changes the overdrive magnification scale to 1.5 from 1.2 based on a command of "2. OVERDRIVE 1.5." The robot control device 50 interlockingly changes the magnification scales of the plurality of parameters defined beforehand which may specify the operating speed of the robot 20, based on the overdrive magnification scale of 1.5. Here, since the overdrive magnification scale is changed to 1.5 from 1.2, the magnification scales of the plurality of parameters are interlockingly changed so that the robot 20 may be operated at a higher speed than before the change.

Moreover, the robot control device 50 operates the tip-end part of the robotic arm 30 at high speed with the overdrive magnification scale of 1.5 to a teaching point #b by a straight line interpolation based on a command of "3. LMOVE #b." Here, the straight line interpolation refers to a straight movement of the tip-end part of the robotic arm 30 by collaborating the joints of the robotic arm 30.

Further, the robot control device 50 operates the tip-end part of the robotic arm 30 at high speed with the overdrive magnification scale of 1.5 to a teaching point #c by the straight line interpolation based on a command of "4. LMOVE #c."

Next, the robot control device 50 changes the overdrive magnification scale to 1 from 1.5 based on a command of "5. OVERDRIVE 1." That is, the robot control device 50 changes the robot 20 from overdrive mode to the normal operating mode based on the command.

Moreover, the robot control device 50 operates the tip-end part of the robotic arm 30 in the normal operating mode to a teaching point #d by the straight line interpolation based on a command of "6. LMOVE #d."

Further, the robot control device 50 changes the overdrive magnification scale from 1 to 1.2 set in advance by the auxiliary function or the monitor instruction, based on a command of "7. OVERDRIVE."

Finally, the robot control device 50 operates the tip-end part of the robotic arm 30 at high speed with the overdrive magnification scale of 1.2 to a teaching point #e by the straight line interpolation based on a command of "8. LMOVE #e."

As described above, the robot control device 50 can control the robot 20 based on the program illustrated in Fig. 3.

As described above, since the overdrive magnification scale is changed for every work performed by the robot 20, the robot 20 is possible to be controlled efficiently, for example, by setting the overdrive magnification scale smaller when holding a workpiece, and setting the overdrive magnification scale larger when not holding the workpiece. Similarly, the robot 20 is possible to be controlled efficiently by setting the overdrive magnification scale larger when the robotic arm 30 is folded and a distance between its tip-end part and its base-end part is closer (i.e., when the inertia is smaller), and setting the overdrive magnification scale smaller when the robotic arm 30 is extended and the distance between the tip-end part and the base-end part is larger (i.e., when the inertia is larger).

### (Effects)

The conventional robot control device operates a robot within an allowable range defined beforehand according to the load applied to the robot. For example, the allowable range of a current value is defined beforehand for every joint of a robotic arm while considering a certain safety factor so that the current value does not reach a saturation current, regardless of the operation pattern of the robot. However, depending on an actual work situation, the allowable range may not be appropriate, and therefore, there are cases where it does not cause any problem even if the robot is operated at high speed without the operation being limited to the allowable range. Moreover, there are demands of operating the robot at high speed without the operation being limited to the allowable range, even if the certain safety factor is reduced to sacrifice the life of the robot to some extent.

In order to solve such a problem, the robot control device 50 according to this embodiment is possible to control the robot 20 in the overdrive mode in which the robot 20 is operated at high speed without the operation being limited to the allowable range, in addition to the normal operating mode in which the robot 20 is operated within the allowable range defined beforehand according to the load applied to the robot 20.

In detail, the robot control device 50 according to this embodiment operates the robot 20 at high speed in the overdrive mode by interlockingly changing the magnification scales of the plurality of parameters defined beforehand which may specify the operating speed of the robot 20 based on the overdrive magnification scale defined beforehand about the degree of high-speed operation in the overdrive mode. As a result, the robot control device 50 according to this embodiment becomes possible to fully shorten the tact time by operating the robot 20 at high speed, without the operation being limited to the allowable range defined beforehand according to the load applied to the robot 20.

Moreover, since the overdrive magnification scale may arbitrarily be set within the given range, or the plurality of overdrive magnification scales may be defined beforehand differently in the stepped fashion, and one may be selected from the magnification scales, the degree of high-speed operation may be changed according to the work situation of the robot 20. Therefore, it can flexibly address the demand of a user.

Further, since the robot control device 50 notifies the information on the influence to the life of the robot 20, when operating the robot 20 at high speed in the overdrive mode, it becomes possible to operate the robot 20 at high speed, without the operation being limited to the allowable range defined beforehand according to the load applied to the robot 20, while grasping the influence to the life of the robot 20.

It is apparent for a person skilled in the art that many improvements and other embodiments of the present disclosure are possible from the above description. Therefore, the above description is to be interpreted only as illustration, and it is provided in order to teach a person skilled in the art the best mode to implement the present disclosure. The details of the structures and/or the functions may be changed substantially, without departing from the spirit of the present disclosure.

### DESCRIPTION OF REFERENCE CHARACTERS

- 10: Robot System
- 20: Robot
- 21: Pedestal
- 30: Robotic Arm
- 31: First Arm Part
- 32: Second Arm Part
- 40: Link
- 50: Robot Control Device

## Claims

1. A robot control device configured to control a robot, the device controlling the robot selectively in a normal operating mode in which the robot is operated within an allowable range defined beforehand according to load applied to the robot and an overdrive mode in which the robot is operated at high speed without operation of the robot being limited to the allowable range, and the device operating the robot at high speed in the overdrive mode by interlockingly changing magnification scales of a plurality of parameters defined beforehand that may specify an operating speed of the robot, based on an overdrive magnification scale defined beforehand about a degree of the high-speed operation in the overdrive mode.

2. The robot control device of claim 1, wherein the overdrive magnification scale is set arbitrarily within a given range.

3. The robot control device of claim 1, wherein the overdrive magnification scale includes a plurality of overdrive magnification scales set beforehand in a stepped fashion and one of the plurality of overdrive magnification scales is set as the overdrive magnification scale.

4. The robot control device of any one of claims 1 to 3, wherein the plurality of parameters include at least any one of an acceleration/deceleration preset value according to operation of the robot, a limit value of electric current supplied to the robot, and a cutoff frequency of a low-pass filter that is applied to a positional instruction to the robot.

5. The robot control device of any one of claims 1 to 4, wherein when operating the robot at high speed in the overdrive mode, information on an influence to the life of the robot is notified.

6. A robot system, comprising:
the robot control device of any one of claims 1 to 5; and
the robot controlled by the robot control device.
